# FASCICULE DE BREVET EUROPEEN

(11) **EP 3 012 182 B1**
(45) Date de publication et mention de la délivrance du brevet: **25.04.2018**
(21) Numéro de dépôt: 15190195.6
(22) Date de dépôt: 16.10.2015
(51) Int. Cl.: B62M 6/90, B62K 21/12

(54) **CYCLE A MOTORISATION ELECTRIQUE ET SYSTEME AUTOMATIQUE DE STOCKAGE DE TELS CYCLES**
ELEKTROFAHRRAD UND ASSOZIIERTE AUTOMATISCHE LAGERSYSTEM
ELECTRICALY DRIVEN CYCLE AND AUTOMATIC STORAGE SYSTEM FOR SUCH CYCLES

(30) Priorité: 20.10.2014 FR 1460057
(43) Date de publication de la demande: 27.04.2016
(73) Titulaire: JCDecaux SA, 92200 Neuilly-Sur-Seine (FR)
(72) Inventeur: LARRAY, Sylvain, 78990 ELANCOURT (FR); FORRESTIER, Jean-Marc, 78180 MONTIGNY LE BRETONNEUX (FR)
(74) Mandataire: Cabinet Plasseraud

(56) Documents cités:
- EP-A1- 2 426 042
- EP-A1- 2 676 874
- EP-A2- 0 403 978
- FR-A1- 3 003 537
- GB-A- 607 476
- GB-A- 2 419 459
- JP-A- 2001 122 179
- JP-A- 2002 127 967

## Description

### DOMAINE DE L'INVENTION

La présente invention est relative aux cycles à motorisation électrique et aux systèmes automatiques de stockage de tels cycles.

Plus particulièrement, l'invention concerne un cycle à motorisation électrique comprenant :
- un cadre comportant une selle,
- au moins une roue arrière montée rotative sur le cadre,
- une roue avant montée rotative sur une fourche solidaire d'un guidon, la roue avant définissant une direction d'avancement du cycle, le guidon comportant une partie centrale articulée au cadre et deux branches latérales comportant des poignées,
- une batterie électrique rechargeable amovible, la batterie ayant une forme aplatie et comportant :
   - des première et deuxième faces principales définissant entre elle une épaisseur de la batterie,
   - deux premiers côtés opposés,
   - deux deuxièmes côtés opposés.
- un réceptacle pour recevoir ladite batterie et la connecter électriquement, le réceptacle étant sur la partie centrale du guidon, le réceptacle comportant deux rebords latéraux parallèles en regard, s'étendant selon la direction d'avancement du cycle entre une extrémité arrière et une extrémité avant, le réceptacle étant ouvert à l'extrémité avant des rebords latéraux, le réceptacle étant conformé pour permettre d'emboîter les premiers côtés de la batterie par coulissement vers l'arrière sur les rebords latéraux du réceptacle à partir de l'extrémité avant desdits rebords latéraux, le réceptacle étant conformé pour limiter le coulissement de la batterie vers l'arrière lorsque ladite batterie est engagée dans le réceptacle, et le réceptacle étant conformé pour qu'un utilisateur assis sur la selle puisse voir au moins une partie de la batterie lorsque ladite batterie est engagée dans ledit réceptacle.

### ARRIERE PLAN DE L'INVENTION

Le document GB2419459A est considéré comme le document de l'art antérieur le plus proche et
décrit un exemple d'un tel cycle, dans lequel le réceptacle est sensiblement horizontal et est fermé à l'extrémité arrière des rebords latéraux, cette extrémité arrière étant pourvue d'un connecteur électrique qui permet la connexion de la batterie.

### OBJETS DE L'INVENTION

La présente invention a notamment pour but de perfectionner encore les cycles du type susmentionnés, de façon notamment à en améliorer l'efficacité et l'ergonomie.

A cet effet, selon l'invention, un stockage cycle du genre en question est caractérisé en ce que,
en ce que, ladite extrémité avant est surélevée par rapport à ladite extrémité arrière dans une position normale d'utilisation du cycle, le réceptacle étant ouvert à l'extrémité arrière des rebords latéraux,
et en ce que les rebords latéraux du réceptacle comportent des connecteurs électriques adaptés pour venir en contact avec des connecteurs complémentaires appartenant à la batterie, pour connecter électriquement la batterie à un circuit électrique appartenant au cycle lorsque la batterie est engagée dans le réceptacle.

Cette disposition du réceptacle permet notamment d'améliorer l'ergonomie du dispositif, dans la mesure notamment où :
- elle facilite l'insertion et l'enlèvement de la batterie, puisque la batterie s'insère sous son propre poids,
- elle permet à l'utilisateur de mieux s'assurer en permanence de la présence et du bon positionnement de la batterie, qui est mieux visible de l'utilisateur (de fait, on limite ainsi également les risques de vol de la batterie ou d'oubli de la batterie lorsqu'on laisse le cycle dans la rue, puisque la batterie est mieux visible de l'utilisateur),

- elle permet que nettoyer aisément le réceptacle,
- elle évite la stagnation d'eau dans le réceptacle et l'encrassement des connecteurs électriques.

Dans différents modes de réalisation du cycle selon l'invention, on peut éventuellement avoir recours en outre à l'une et/ou à l'autre des dispositions suivantes (utilisables éventuellement indépendamment les unes des autres et indépendamment des dispositions précitées) :
- le réceptacle est solidarisé au guidon de façon à imposer une inclinaison prédéterminée audit réceptacle, pour que ladite extrémité avant soit surélevée par rapport à ladite extrémité arrière dans la position normale d'utilisation du cycle ;
- le réceptacle est en forme de berceau comportant un fond reliant les deux rebords latéraux, ledit réceptacle étant ouvert vers le haut entre les deux rebords latéraux ;
- le fond du réceptacle comporte des indications visuelles guidant l'utilisateur pour insérer la batterie dans le réceptacle ;
- le fond du réceptacle comporte au moins une nervure de support parallèle aux rebords latéraux du réceptacle, la batterie s'appuyant sur cette nervure de support lorsque ladite batterie est engagée dans le réceptacle ;
- les connecteurs électriques des rebords latéraux comportent des connecteurs de circuit de puissance et des connecteurs de circuit de données ;
- les rebords latéraux du réceptacle et les premiers côtés de la batterie comportent des moyens de rétention adaptés pour retenir la batterie par clipsage lorsqu'elle est engagée dans le réceptacle ;
- les rebords latéraux du réceptacle comportent chacun une paire de nervures parallèles superposées qui définissent entre elles une gorge dans laquelle sont abrités lesdits connecteurs électriques du réceptacle, les premiers côtés de la batterie comportant chacun une rainure qui reçoit une desdites paires de nervures, les connecteurs complémentaires de la batterie étant disposés dans lesdites rainures en regard des connecteurs électriques du réceptacle (ces dispositions permettent de bien protéger les connecteurs électriques du réceptacle et les connecteurs complémentaires de la batterie);
- la batterie comporte un circuit électronique de commande et des moyens d'affichage électroniques commandés par ledit circuit électronique de commande, lesdits moyens d'affichage étant visibles de l'utilisateur assis sur la selle ;
- les moyens d'affichage comprennent des diodes électroluminescentes ;
- le circuit électronique de commande est adapté pour recevoir des informations d'état de la batterie et pour faire afficher lesdites informations d'état par les moyens d'affichage ;
- le circuit électronique de commande est adapté pour communiquer avec un mobile comprenant des moyens de navigation, le circuit électronique de commande étant adapté pour recevoir des informations de navigation du mobile et pour faire afficher lesdites informations de navigation par les moyens d'affichage (on tire ainsi parti du fait que la batterie est bien visible de l'utilisateur ; on tire également partie du fait que le mobile et la batterie sont généralement personnels à l'utilisateur et peuvent être configurés par avance pour que la communication entre la batterie et le mobile s'établisse instantanément et simplement);
- le guidon comporte une structure porteuse et un carter recouvrant ladite structure porteuse, le réceptacle de la batterie étant intégré audit carter ;
- la batterie comporte des moyens de détection adaptés pour détecter que la batterie est connectée au cycle et des moyens de commande adaptés pour empêcher que la batterie ne se décharge tant que les moyens de détection ne détectent pas que la batterie est connectée au cycle.

L'invention a également pour objet un système automatique de stockage de cycles comprenant :
- une pluralité de batteries électriques rechargeables amovibles, ayant chacune une forme aplatie et comportant et comportant :
   - des première et deuxième faces principales définissant entre elle une épaisseur de la batterie,
   - deux premiers côtés opposés,
   - deux deuxièmes côtés opposés,
- une pluralité de cycles à motorisation électrique comprenant chacun :
   - un cadre comportant une selle,
   - au moins une roue arrière montée rotative sur le cadre,
   - une roue avant montée rotative sur une fourche solidaire d'un guidon, la roue avant définissant une direction d'avancement du cycle, le guidon comportant une partie centrale articulée au cadre et deux branches latérales comportant des poignées,
   - une batterie électrique rechargeable amovible, la batterie ayant une forme aplatie et comportant :
      - des première et deuxième faces principales définissant entre elle une épaisseur de la batterie,
      - deux premiers côtés opposés,
      - deux deuxièmes côtés opposés,
   - un réceptacle pour recevoir ladite batterie et la connecter électriquement,
   - une pluralité de postes de verrouillage fixes sur lesquels peuvent se verrouiller lesdits cycles,
   - et au moins un dispositif de commande externe adapté pour sélectivement autoriser le verrouillage et le déverrouillage des cycles sur lesdits postes de verrouillage.

Un système de ce type est connu notamment du document FR2988068.

Selon l'invention, un tel système est caractérisé en ce que le réceptacle est sur la partie centrale du guidon,
en ce que le réceptacle comporte deux rebords latéraux parallèles en regard, s'étendant selon la direction d'avancement du cycle entre une extrémité arrière et une extrémité avant, l'extrémité avant étant surélevée par rapport à l'extrémité arrière dans une position normale d'utilisation du cycle, le réceptacle étant ouvert aux extrémités avant et arrière des rebords latéraux, le réceptacle étant conformé pour permettre d'emboîter les premiers côtés de la batterie par coulissement vers l'arrière sur les rebords latéraux du réceptacle à partir de l'extrémité avant desdits rebords latéraux, et le réceptacle étant conformé pour limiter le coulissement de la batterie vers l'arrière lorsque ladite batterie est engagée dans le réceptacle,
en ce que les rebords latéraux du réceptacle comportent des connecteurs électriques adaptés pour venir en contact avec des connecteurs complémentaires appartenant à la batterie, pour connecter électriquement la batterie à un circuit électrique appartenant au cycle lorsque la batterie est engagée dans le réceptacle,
et en ce que le réceptacle est conformé pour qu'un utilisateur assis sur la selle puisse voir au moins une partie de la batterie lorsqu'elle est engagée dans ledit réceptacle.

Enfin, l'invention a aussi pour objet un cycle à motorisation électrique comprenant :
- un cadre comportant une selle,
- au moins une roue arrière montée rotative sur le cadre,
- une roue avant montée rotative sur une fourche solidaire d'un guidon, la roue avant définissant une direction d'avancement du cycle, le guidon comportant une partie centrale articulée au cadre et deux branches latérales comportant des poignées,
- une batterie électrique rechargeable amovible,
- un réceptacle pour recevoir ladite batterie et la connecter électriquement,
le réceptacle étant sur la partie centrale du guidon,
la batterie comportant un circuit électronique de commande et des moyens d'affichage électroniques (par exemple des diodes électroluminescentes) commandés par ledit circuit électronique de commande, lesdits moyens d'affichage étant visibles de l'utilisateur assis sur la selle,
le circuit électronique de commande étant adapté pour communiquer avec un mobile comprenant des moyens de navigation, le circuit électronique de commande étant adapté pour recevoir des informations de navigation du mobile et pour faire afficher lesdites informations de navigation par les moyens d'affichage.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles à motorisation électrique et à batterie amovible selon une forme de réalisation de l'invention,
- la figure 2 est une vue en perspective montrant la batterie d'un des cycles de la figure 1 en cours d'insertion dans le réceptacle de batterie du cycle,
- le figure 3 est une vue est une vue similaire à la figure 2, montrant le réceptacle de batterie du cycle de la figure 1,
- la figure 4 est une vue similaire à la figure 2, montrant la batterie engagée dans le réceptacle,
- et la figure 5 est un schéma bloc illustrant les composants électriques principaux du système de stockage de cycles de la figure 1.

### DESCRIPTION PLUS DETAILLEE

Sur les différentes figures, les mêmes références désignent des éléments identiques ou similaires.

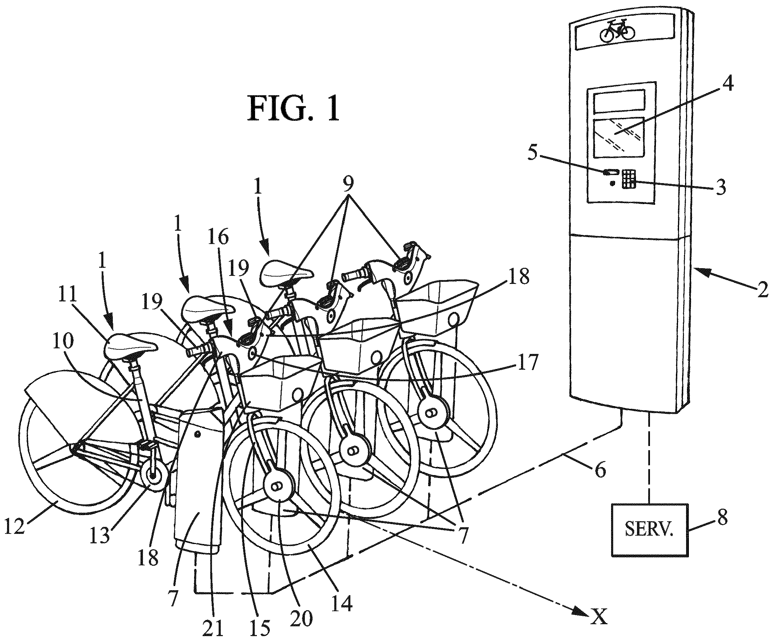

Comme représenté sur la figure 1, la présente invention concerne un système automatique de stockage de cycles 1 tels que notamment des bicyclettes, permettant par exemple de stocker des cycles sur la voie publique de façon à les mettre à la disposition du public.

Ce système automatique de stockage de cycles peut comporter plusieurs stations de stockage de cycles, dont une est représentée sur la figure 1. Chaque station de stockage de cycles peut comprendre par exemple un poste central de station 2, qui se présente ici sous la forme d'une borne interactive dotée d'une interface utilisateur comprenant par exemple un clavier 3, un écran 4, un lecteur de cartes portatives électroniques 5, un dispositif d'impression de tickets, etc. En variante, la borne interactive 2 pourrait ne pas comporter d'interface utilisateur et être une simple passerelle de communication entre la station de stockage de cycles et un serveur central 8 (SERV.).

La borne interactive 2 communique d'une part, avec le serveur central 8 qui gère les abonnements et les locations de cycles, et d'autre part, avec une pluralité de postes de verrouillage 7 qui permettent de verrouiller les cycles pendant leur stockage et qui peuvent par exemple se présenter sous la forme de bornes de verrouillage fixées au sol sur la voie publique et adaptées pour verrouiller chacune un cycle 1.

Comme représenté sur la figure 1, chaque cycle 1 peut être un cycle à assistance électrique fonctionnant avec des batteries amovibles 9 indépendantes des cycles et comportant :
- un cadre 10 comportant une selle 11,
- au moins une roue arrière 12 montée rotative sur le cadre 10 et entraînée par un pédalier 13 lui-même monté sur le cadre,
- une roue avant 14 montée rotative sur une fourche 15 et solidaire d'un guidon 16 qui définissent une direction d'avancement du cycle X, le guidon comportant une partie centrale 17 articulée au cadre et deux branches latérales 18 comportant des poignées 19.

La roue avant peut avantageusement comporter un moyeu moteur 20 intégrant un moteur électrique alimenté par la batterie 9.

La fourche 15 ou le guidon 16 peut éventuellement porter en outre un panier 21.

Les batteries électriques 9 du système sont amovibles et indépendantes des cycles 1. Elles peuvent avantageusement appartenir aux utilisateurs, qui emportent leur batterie avec eux pour la recharger chez eux après usage du cycle.

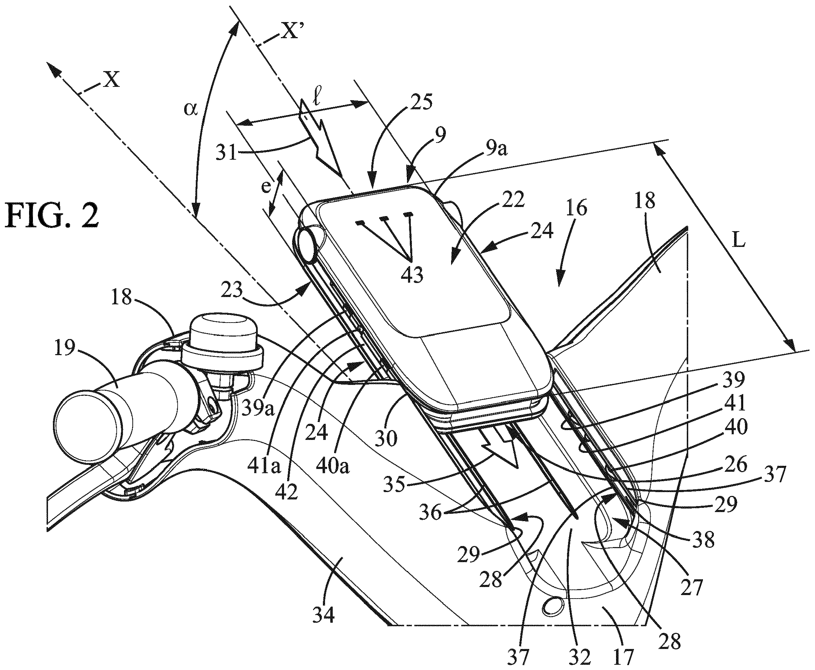

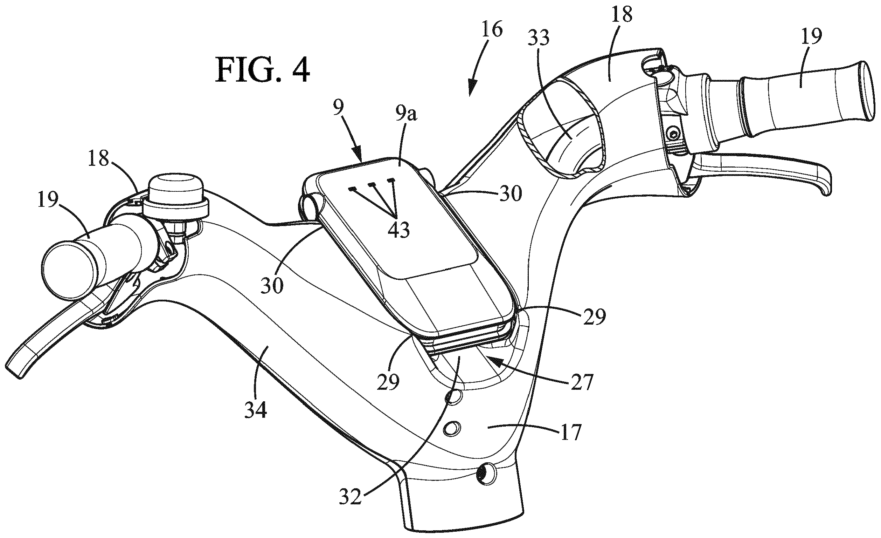

Comme représenté plus en détail sur les figures 2 et 4, chaque batterie 9 peut comporter une coque externe 9a, réalisée par exemple en matière plastique. Cette coque externe 9a peut présenter une forme aplatie ayant :
- des première et deuxième faces principales 22, 23, respectivement supérieure et inférieure en utilisation normale du cycle, définissant entre elle une épaisseur e de la batterie 9,
- deux premiers côtés opposés 24, par exemple deux grands côtés définissant une longueur L de la batterie,
- deux deuxièmes côtés opposés 25, 26 respectivement avant et arrière, par exemple deux petits côtés définissant une largueur *l* de la batterie.

Chaque batterie 9, peut être par exemple une batterie au lithium, choisie notamment parmi les batteries lithium-ions-polymères et les batteries lithium-fer-phosphate, produisant une tension par exemple de 24 ou 36 V. Elle peut présenter une capacité de stockage d'énergie électrique comprise entre 40 et 100 Wh (avantageusement comprise entre 60 et 85 Wh), une masse inférieure à 1 kg (avantageusement comprise entre 500 et 900 g), une longueur L inférieure à 20 cm (avantageusement comprise entre 10 et 15 cm), une largeur *l* comprise entre 8 et 12 cm et une épaisseur e comprise entre 15 et 40 mm.

Chaque cycle 1 comporte un réceptacle 27, bien visible sur les figures 2 à 4, pour recevoir une des batteries 9 et la connecter électriquement au cycle.

Avantageusement, le réceptacle 27 est sur la partie centrale 17 du guidon.

Le réceptacle 27 comporte deux rebords latéraux 28 parallèles en regard, s'étendant selon la direction d'avancement X du cycle entre une extrémité arrière 29 et une extrémité avant 30. L'extrémité avant 30 est surélevée par rapport à l'extrémité arrière 29 dans une position normale d'utilisation du cycle, de sorte que les rebords s'étendent longitudinalement selon une direction X' qui est dans le même plan vertical que la direction horizontale d'avancement X. La direction longitudinale X' des rebords latéraux 28 forme un angle α avec la direction horizontale d'avancement X, cet angle α pouvant être par exemple compris entre 30 et 60 degrés, par exemple de l'ordre de 45 degrés.

Le réceptacle 27 est solidarisé au guidon 16 de façon à imposer l'inclinaison desdits rebords latéraux 28.

Le réceptacle 27 est ouvert aux extrémités avant 30 et arrière 29 des rebords latéraux 28.

Les rebords latéraux 28 forment des glissières adaptées pour coopérer par emboîtement coulissant avec les premiers côtés 24 de la batterie 9.

Le réceptacle 27 est conformé pour permettre de d'emboîter les premiers côtés 24 de la batterie 9 par coulissement vers l'arrière sur les rebords latéraux 28 du réceptacle 27, à partir de l'extrémité avant 30 desdits rebords latéraux 28 (dans le sens de la flèche 31 de la figure 2).

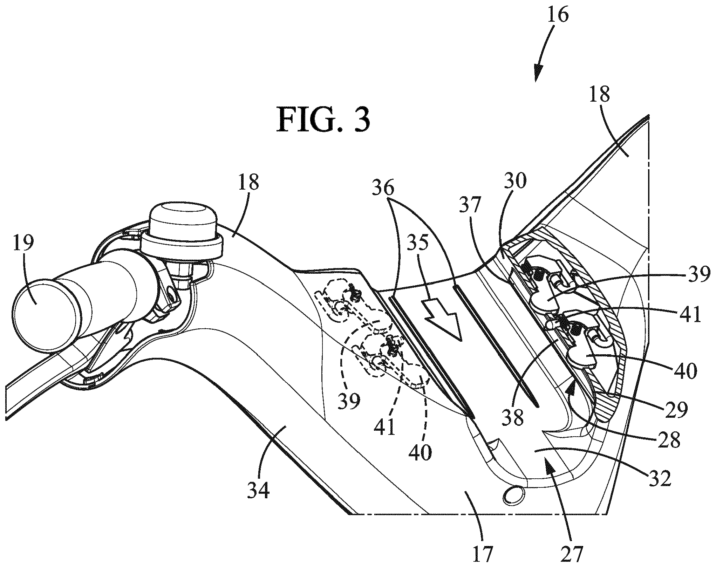

Le réceptacle est également conformé pour limiter le coulissement de la batterie 8 vers l'arrière par butée, lorsque ladite batterie est engagée dans le réceptacle (figure 3).

Le réceptacle est conformé pour qu'un utilisateur assis sur la selle 11 puisse voir au moins une partie de la batterie 9 lorsqu'elle est engagée dans ledit réceptacle 27.

A cet effet, le réceptacle 27 peut être ouvert vers le haut, de sorte que la majeure partie de la batterie 9 est visible de l'utilisateur, et ce d'autant mieux que les rebords latéraux 28 du réceptacle 27 sont inclinés, comme indiqué ci-dessus. Cette disposition permet que l'utilisateur ait un contrôle visuel permanent de la batterie 9, limitant les risques de mauvais engagement de la batterie, de vol de batterie pendant l'utilisation et d'oubli de batterie en fin d'utilisation.

Le réceptacle 27 peut être en forme de berceau comportant un fond 32 reliant les deux rebords latéraux 28. Le fond 32 est incliné vers l'arrière et vers le bas, avec avantageusement un profil rectiligne ou convexe dans un plan vertical contenant les directions X, X', et avec un profil concave dans un plan perpendiculaire à la direction X. Cette forme facilite l'évacuation de l'eau de pluie et le nettoyage du réceptacle 27.

Le fond 32 du réceptacle peut comporter des indications visuelles 35 guidant l'utilisateur pour insérer la batterie dans le réceptacle.

Le fond 32 du réceptacle 27 peut également comporter au moins une nervure de support 36 parallèle aux rebords latéraux 28 du réceptacle (par exemple deux nervures 36), la batterie 9 s'appuyant sur la ou les nervure(s) de support 36 lorsque ladite batterie est engagée dans le réceptacle 27. On laisse ainsi un espace libre sous la batterie 9, ce qui contribue aussi à faciliter l'évacuation d'eau de pluie.

Le guidon 16 peut comporter une structure porteuse 33, par exemple une structure métallique tubulaire (figure 4), et un carter 34 recouvrant ladite structure porteuse 33 et porté par elle, par exemple un carter en matière plastique. Le réceptacle 27 peut être intégré au carter 34. Notamment, le réceptacle 27 peut être formé par une partie de la surface supérieure du carter 34 dans la position normale d'utilisation du cycle 1.

Les rebords latéraux 28 du réceptacle 27 comportent des connecteurs électriques 39, 40 adaptés pour venir en contact avec des connecteurs complémentaires 39a, 40a appartenant aux premiers côtés 24 de la batterie 9, pour connecter électriquement la batterie 9 au cycle 1 lorsque la batterie 9 est engagée dans le réceptacle 27. Les connecteurs électriques 39, 40 peuvent être avantageusement répartis entre les rebords latéraux 28 de part et d'autre du réceptacle 27. Par exemple, les connecteurs électriques 39, 40 des rebords latéraux comportent des connecteurs de circuit de puissance 39 disposés respectivement dans les deux rebords latéraux 28 et des connecteurs de circuit de données 40 disposés respectivement dans les deux rebords latéraux 28. Les connecteurs électriques 39, 40 peuvent par exemple être des contacts métalliques élastiques ou des contacts métalliques rigides sollicités élastiquement vers l'intérieur du réceptacle, contre les connecteurs complémentaires 39a, 40a de la batterie.

Les rebords latéraux 28 du réceptacle et les premiers côtés 24 de la batterie peuvent en outre comporter des moyens de rétention 41, 41a adaptés pour retenir la batterie 9 par clipsage lorsqu'elle est engagée dans le réceptacle 27. Ces moyens de rétention peuvent par exemple comporter des billes ou similaires montées dans les rebords latéraux 28 et mobiles entre une position en saillie vers l'intérieur du réceptacle 27 et une position effacée dans le rebord latéral 27, lesdites billes étant sollicitées élastiquement vers la position en saillie. Dans ce cas, les moyens de rétention peuvent également comporter des évidements 41a ménagés dans les premiers bords 24 de la batterie et adaptés pour recevoir les billes 41.

Dans une forme de réalisation avantageuse, les rebords latéraux 28 du réceptacle peuvent comporter chacun une paire de nervures parallèles 37 superposées qui font saillie horizontalement vers l'intérieur du réceptacle 27 et définissent entre elles une gorge 38 dans laquelle sont abrités lesdits connecteurs électriques 39, 40 du réceptacle et le cas échéant les moyens de rétention 41. Avantageusement, les nervures 37 recouvrent entièrement les connecteurs 39, 40 et le cas échéant les moyens de rétention 41, de façon à les protéger au maximum des chocs et des salissures. Chaque premier côté 24 de la batterie peut comporter une rainure 42 qui reçoit une desdites paires de nervures 37. Les connecteurs complémentaires 39a, 40a de la batterie sont disposés dans lesdites rainures 42 en regard des connecteurs électriques 39, 40 du réceptacle, et les évidements 41a de la batterie sont disposés dans lesdites rainures 42 en regard des billes 41.

Avantageusement, la batterie 9 peut comporter des moyens d'affichage, par exemple des diodes électroluminescentes 43, commandées par un circuit électronique de commande de batterie qui sera décrit plus loin.

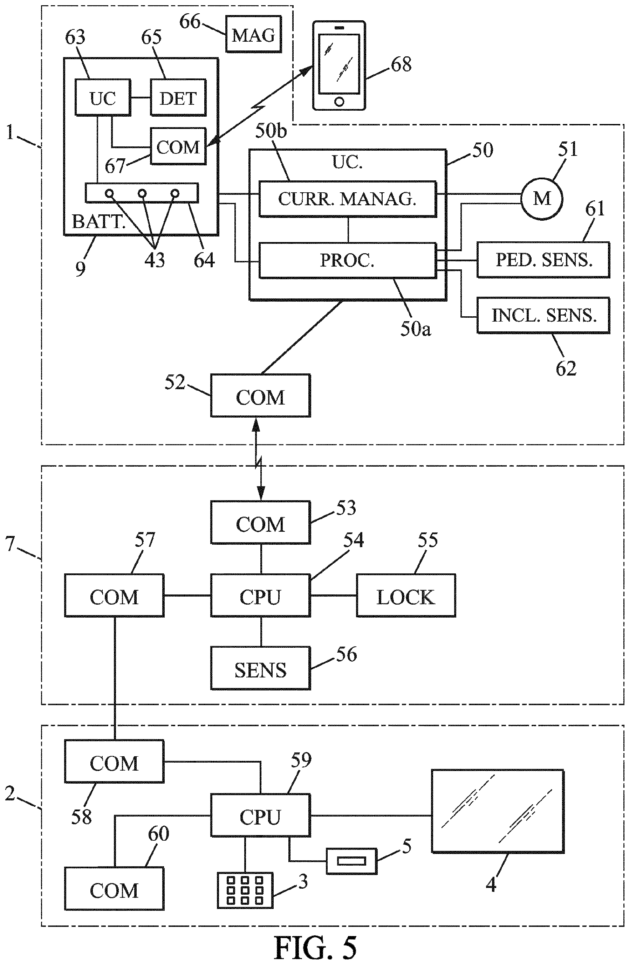

Le fonctionnement électrique du cycle est commandé par un dispositif de commande de cycle 50 représenté sur la figure 5, qui sera appelé ci-dessous unité centrale 50 (UC). Cette unité centrale 50 peut être un dispositif intégré ou une combinaison de cartes électroniques éventuellement réparties à plusieurs endroits dans le cycle 1, par exemple dans le carter 34 et/ou dans un boîtier disposé dans le panier 21 (dans ce cas, le boîtier en question peut par exemple être fixé au niveau du fond et / ou d'une ou plusieurs parois latérales du panier 21).

Dans l'exemple de la figure 5, l'unité centrale 50 comporte un processeur 50a (PROC) et une unité de gestion d'énergie 50b (CURR. MANAG.).

L'unité de gestion d'énergie 50b est reliée d'une part à la batterie 9 par les connecteurs de circuit de puissance 39 susmentionnés (et éventuellement à une batterie fixe montée à demeure sur le cycle 1), et d'autre part à un moteur électrique 51 (M), par exemple un moteur d'assistance électrique au pédalage appartenant par exemple au moyeu moteur 20 susmentionné. Le moteur 51 peut par exemple développer une puissance normalisée d'environ 250 W, et fonctionner sous une tension par exemple de 24 ou 36 V.au moteur 51. L'unité de gestion d'énergie 50b est commandée par le processeur 50a pour contrôler le fonctionnement du moteur 51.

Le processeur 50a peut être relié également, notamment :
- à une unité centrale électronique 63 (UC) appartenant à la batterie 9 par l'intermédiaire des connecteurs 40 de circuit de données susmentionnés),
- au moteur 51, de façon à recevoir notamment une mesure de vitesse de rotation dudit moteur,
- à un capteur de pédalier 61 (PED. SENS.), connu en soi, pour recevoir une mesure de couple appliqué au pédalier 13 par l'utilisateur et une mesure de vitesse de rotation du pédalier 13,
- et avantageusement à un capteur d'inclinaison 62 (INCL. SENS.) adapté pour mesurer une inclinaison du cycle 1 (et donc du sol) dans la direction d'avancement X.

Le processeur 50a commande également une interface de communication 52 (COM) qui est adaptée pour communiquer avec une interface de communication similaire 53 (COM) appartenant à chaque borne de verrouillage 7. Les interfaces de communication 52, 53 peuvent être de tout type connu et fonctionner par exemple en mode filaire, par induction, par ondes radio ou autres.

L'interface de communication 53 de la borne de verrouillage 7 peut communiquer avec une unité centrale électronique 54 (CPU) propre à la borne de verrouillage 7 (microprocesseur, microcontrôleur ou autre), laquelle unité centrale 54 commande par ailleurs un verrou électrique 55 (LOCK - un exemple d'un tel verrou est donné par exemple dans le document EP-A-1 820 722) adapté pour verrouiller un cycle sur la borne de verrouillage 7, et communique avec au moins un capteur 56 (SENS) adapté pour détecter le verrouillage d'un cycle 1 sur la borne de verrouillage 7, et une interface de communication 57 (COM), par exemple un MODEM adapté pour communiquer par voie filaire 6 (figure 1) ou par une liaison radio courte portée ou tout autre manière, avec une interface de communication 58 similaire (COM) appartenant à la borne interactive 2 susmentionnée.

La borne interactive 2 comporte, quant à elle, également une unité centrale électronique 59 (CPU) telle qu'un microprocesseur, microcontrôleur ou autre, qui communique avec les périphériques 3-5 susmentionnés ainsi qu'avec une interface de communication 60 (COM) telle qu'un MODEM communiquant par radio ou par voie filaire avec le serveur central 8 susmentionné.

L'unité centrale 63 de la batterie commande l'affichage 64, constitué par exemple simplement par les diodes électroluminescentes 43 susmentionnées, ici par exemple au nombre de trois.

L'unité centrale 63 de la batterie peut être adapté pour recevoir des informations d'état de la batterie 9 (par exemple niveau de charge, défaut de fonctionnement, etc.) et pour faire afficher lesdites informations d'état par l'affichage 64. A titre d'exemple non limitatif, les diodes électroluminescentes 43 peuvent clignoter ou lors de la détection d'un défaut de la batterie 9 ou d'une charge insuffisante, ou encore l'unité centrale 63 peut allumer un nombre de diodes électroluminescentes 43 dépendant du niveau de charge.

L'unité centrale 63 de la batterie peut être reliée en outre à un détecteur 65 (DET) adapté pour détecter que la batterie est connectée au cycle 1. Le détecteur 65 peut par exemple être un capteur magnétique adapté pour donner un signal de détection lorsqu'il se trouve en regard d'un aimant 66 (MAG) intégré par exemple dans ou sous le fond 32 du réceptacle 27. L'unité centrale 63 de la batterie peut avantageusement être adaptée pour empêcher que la batterie 9 ne se décharge tant que le détecteur 65 ne détecte pas que la batterie 9 est connectée au cycle 1.

L'unité centrale 63 de la batterie peut en outre être reliée à une interface de communication 67 (COM) adaptée pour communiquer avec un mobile de radiocommunication 68 (« smartphone » ou autre) appartenant à l'utilisateur. L'interface de communication 67 peut par exemple être une interface radio, notamment de type Bluetooth ou autre.

Cette communication entre l'unité centrale 63 et le mobile 68 peut permettre de transmettre des informations personnalisées au mobile 68 concernant le fonctionnement de la batterie 9 et l'utilisation du cycle 1. Cette communication peut également permettre de commander le mode de fonctionnement du cycle 1 à partir du mobile 68, notamment le type d'assistance électrique procuré par le moteur 51.

Lorsque le mobile comprend des moyens de navigation, cette communication permet au mobile 68 de donner des informations de navigation à l'unité centrale 63, qui peut les faire afficher de façon simple par l'affichage 64. Par exemple, les diodes électroluminescentes 43 peuvent être disposées notamment selon une ligne horizontale, et l'unité centrale 63 fait clignoter les diodes électroluminescentes 43 situées à droite lorsque le cycle doit tourner à droite et les diodes électroluminescentes 43 situées à gauche lorsque le cycle doit tourner à gauche.

Le dispositif qui vient d'être décrit fonctionne comme suit : lorsqu'un utilisateur souhaite emprunter un cycle 1 sur la station, il s'identifie par exemple sur la borne interactive 2 ou par tout autre moyen connu, de façon à choisir un cycle 1 et le libérer de sa borne de verrouillage 7, de façon connue en soi, et il apporte avec lui une batterie 9 chargée qu'il engage dans le réceptacle 27 du cycle.

Après utilisation, l'utilisateur rend le cycle 1 sur une station de stockage de cycles (qui peut être celle sur laquelle il a emprunté le cycle ou une autre station) en le reverrouillant sur une borne de verrouillage 7 de cette station, de façon également connue en soi. Lorsque le cycle 1 a été verrouillé sur la borne de verrouillage 7, la borne de verrouillage 7 détecte ce verrouillage au moyen du capteur 56 et renvoie l'information vers le cycle 1 par l'intermédiaire des interfaces de communication 53 et 52 et vers la borne interactive 2 par l'intermédiaire des interfaces de communication 58 et 57.

## Revendications

1. Cycle à motorisation électrique comprenant :
- un cadre (10) comportant une selle (11),
- au moins une roue arrière (12) montée rotative sur le cadre (10),
- une roue avant (14) montée rotative sur une fourche (15) solidaire d'un guidon (16), la roue avant (14) définissant une direction d'avancement (X) du cycle (1), le guidon (16) comportant une partie centrale (17) articulée au cadre (10) et deux branches latérales (18) comportant des poignées (19),
- une batterie (9) électrique rechargeable amovible, la batterie (9) ayant une forme aplatie et comportant :
• des première et deuxième faces principales (22, 23) définissant entre elle une épaisseur (e) de la batterie,
• deux premiers côtés (24) opposés,
• deux deuxièmes côtés (25) opposés,
- un réceptacle (27) pour recevoir ladite batterie (9) et la connecter électriquement, le réceptacle (27) étant sur la partie centrale (17) du guidon (16), le réceptacle (27) comportant deux rebords latéraux (28) parallèles en regard, s'étendant selon la direction d'avancement (X) du cycle (1) entre une extrémité arrière (29) et une extrémité avant(30), le réceptacle (27) étant ouvert à l'extrémité avant le réceptacle (27) étant ouvert à l'extrémité avant (30) des rebords latéraux (28), le réceptacle (27) étant conformé pour permettre d'emboîter les premiers côtés (24) de la batterie (9) par coulissement vers l'arrière sur les rebords latéraux (28) du réceptacle (27) à partir de l'extrémité avant (30) desdits rebords latéraux (28), et le réceptacle (27) étant conformé pour limiter le coulissement de la batterie (9) vers l'arrière lorsque ladite batterie (9) est engagée dans le réceptacle (27), et le réceptacle (27) étant conformé pour qu'un utilisateur assis sur la selle (11) puisse voir au moins une partie de la batterie (9) lorsque ladite batterie est engagée dans ledit réceptacle (27),
**caractérisé en ce que** ladite extrémité avant (30) étant surélevée par rapport à ladite extrémité arrière (29) dans une position normale d'utilisation du cycle (1), le réceptacle (27) étant ouvert à l'extrémité arrière (29) des rebords latéraux (28), **et en ce que** les rebords latéraux (28) du réceptacle (27) comportent des connecteurs électriques (39, 40) adaptés pour venir en contact avec des connecteurs complémentaires (39a, 40a) appartenant à la batterie (9), pour connecter électriquement la batterie (9) à un circuit électrique (51) appartenant au cycle (1) lorsque la batterie (9) est engagée dans le réceptacle (27).

2. Cycle selon la revendication 1, dans lequel le réceptacle (27) est solidarisé au guidon (16) de façon à imposer une inclinaison prédéterminée audit réceptacle, pour que ladite extrémité avant (30) soit surélevée par rapport à ladite extrémité arrière (29) dans la position normale d'utilisation du cycle.

3. Cycle selon la revendication 1 ou la revendication 2, dans lequel le réceptacle (27) est en forme de berceau comportant un fond (32) reliant les deux rebords latéraux (28), ledit réceptacle étant ouvert vers le haut entre les deux rebords latéraux.

4. Cycle selon la revendication 3, dans lequel le fond (32) du réceptacle comporte des indications visuelles (35) guidant l'utilisateur pour insérer la batterie (9) dans le réceptacle (27).

5. Cycle selon la revendication 3 ou la revendication 4, dans lequel le fond (32) du réceptacle comporte au moins une nervure de support (36) parallèle aux rebords latéraux (28) du réceptacle, la batterie (9) s'appuyant sur cette nervure de support (36) lorsque ladite batterie est engagée dans le réceptacle.

6. Cycle selon l'une quelconque des revendications précédentes, dans lequel les connecteurs électriques des rebords latéraux comportent des connecteurs de circuit de puissance (39) et des connecteurs de circuit de données (40).

7. Cycle selon l'une quelconque des revendications précédentes, dans lequel les rebords latéraux (28) du réceptacle et les premiers côtés (24) de la batterie comportent des moyens de rétention (41, 41a) adaptés pour retenir la batterie (9) par clipsage lorsqu'elle est engagée dans le réceptacle (27).

8. Cycle selon l'une quelconque des revendications précédentes, dans lequel les rebords latéraux (28) du réceptacle comportent chacun une paire de nervures (37) parallèles superposées qui définissent entre elles une gorge (38) dans laquelle sont abrités lesdits connecteurs électriques (39, 40) du réceptacle, les premiers côtés (24) de la batterie comportant chacun une rainure (42) qui reçoit une desdites paires de nervures (37), les connecteurs complémentaires (39a, 40a) de la batterie étant disposés dans lesdites rainures (42) en regard des connecteurs électriques (39, 40) du réceptacle.

9. Cycle selon l'une quelconque des revendications précédentes, dans lequel la batterie (9) comporte un circuit électronique de commande (63) et des moyens d'affichage électroniques (64) commandés par ledit circuit électronique de commande (63), lesdits moyens d'affichage (64) étant visibles de l'utilisateur assis sur la selle (11).

10. Cycle selon la revendication 9, dans lequel les moyens d'affichage (64) comprennent des diodes électroluminescentes (43).

11. Cycle selon la revendication 9 ou la revendication 10, dans lequel le circuit électronique de commande (63) est adapté pour recevoir des informations d'état de la batterie (9) et pour faire afficher lesdites informations d'état par les moyens d'affichage (64).

12. Cycle selon l'une quelconque des revendications 9 à 11, dans lequel le circuit électronique de commande (63) est adapté pour communiquer avec un mobile (68) comprenant des moyens de navigation, le circuit électronique de commande (63) étant adapté pour recevoir des informations de navigation du mobile (68) et pour faire afficher lesdites informations de navigation par les moyens d'affichage (64).

13. Cycle selon l'une quelconque des revendications précédentes, dans lequel le guidon (16) comporte une structure porteuse (33) et un carter (34) recouvrant ladite structure porteuse, le réceptacle (27) de la batterie étant intégré audit carter (34).

14. Cycle selon l'une quelconque des revendications précédentes, dans lequel la batterie (9) comporte des moyens de détection (65) adaptés pour détecter que la batterie est connectée au cycle (1) et des moyens de commande (63) adaptés pour empêcher que la batterie ne se décharge tant que les moyens de détection (65) ne détectent pas que la batterie est connectée au cycle.

15. Système automatique de stockage de cycles (1) comprenant :
- une pluralité de batteries (9) électriques rechargeables amovibles, ayant chacune une forme aplatie et comportant :
• des première et deuxième faces principales (22, 23) définissant entre elle une épaisseur (e) de la batterie (9),
• deux premiers côtés (24) opposés,
• deux deuxièmes côtés (25) opposés,
- une pluralité de cycles (1) à motorisation électrique comprenant chacun :
• un cadre (10) comportant une selle (11),
• au moins une roue arrière (12) montée rotative sur le cadre (10),
• une roue avant (14) montée rotative sur une fourche (15) solidaire d'un guidon (16), la roue avant (14) définissant une direction d'avancement (X) du cycle, le guidon (16) comportant une partie centrale (17) articulée au cadre (10) et deux branches latérales (18) comportant des poignées (19),
• un réceptacle (27) pour recevoir une desdites batteries (9) et la connecter électriquement au cycle (1),
- une pluralité de postes de verrouillage fixes (7) sur lesquels peuvent se verrouiller lesdits cycles (1),
- et au moins un dispositif de commande externe (2, 8) adapté pour sélectivement autoriser le verrouillage et le déverrouillage des cycles (1) sur lesdits postes de verrouillage (7),
**caractérisé en ce que** le réceptacle (27) est sur la partie centrale (17) du guidon (16), **en ce que** le réceptacle (27) comporte deux rebords latéraux (28) parallèles en regard, s'étendant selon la direction d'avancement (X) du cycle (1) entre une extrémité arrière (29) et une extrémité avant(30), l'extrémité avant (30) étant surélevée par rapport à l'extrémité arrière (29) dans une position normale d'utilisation du cycle (1), le réceptacle (27) étant ouvert aux extrémités avant (30) et arrière (29) des rebords latéraux (28), le réceptacle (27) étant conformé pour permettre d'emboîter les premiers côtés (24) de la batterie (9) par coulissement vers l'arrière sur les rebords latéraux (28) du réceptacle (27) à partir de l'extrémité avant (30) desdits rebords latéraux (28), et le réceptacle (27) étant conformé pour limiter le coulissement de la batterie (9) vers l'arrière lorsque ladite batterie (9) est engagée dans le réceptacle (27),
**en ce que** les rebords latéraux (28) du réceptacle (27) comportent des connecteurs électriques (39, 40) adaptés pour venir en contact avec des connecteurs complémentaires (39a, 40a) appartenant à la batterie (9), pour connecter électriquement la batterie (9) à un circuit électrique (51) appartenant au cycle (1) lorsque la batterie (9) est engagée dans le réceptacle (27),
**et en ce que** le réceptacle (27) est conformé pour qu'un utilisateur assis sur la selle (11) puisse voir au moins une partie de la batterie (9) lorsqu'elle est engagée dans ledit réceptacle (27).

## Patentansprüche

1. Elektrofahrrad aufweisend:
- einen Rahmen (10) mit einem Sattel (11),
- mindestens ein Hinterrad (12), das drehbar an dem Rahmen (10) angebracht ist,
- ein Vorderrad (14), das drehbar an einer Gabel (15) angebracht ist, die fest verbunden mit einer Lenkstange (16) ist, wobei das Vorderrad (14) eine Laufrichtung (X) des Fahrrads (1) bestimmt, wobei die Lenkstange (16) einen gelenkig mit dem Rahmen (10) verbundenen zentralen Teil (17) und zwei Seitenarme (18) mit Griffen (19) aufweist,
- eine abnehmbare wiederaufladbare elektrische Batterie (9), die eine abgeplattete Form hat und aufweist:
* erste und zweite Hauptflächen (22, 23), die zwischen sich eine Dicke (e) der Batterie definieren,
* zwei erste Gegenflächen (24),
* zwei zweite Gegenflächen (25),
- eine Aufnahmeeinrichtung (27), um die Batterie (9) aufzunehmen und sie elektrisch zu verbinden, wobei
die Aufnahmeeinrichtung (27) an dem zentralen Teil (17) der Lenkstange (16) ist,
die Aufnahmeeinrichtung (27) zwei gegenüberliegende parallele Seitenränder (28) aufweist, die sich in die Laufrichtung (X) des Fahrrads (1) zwischen einem hinteren Ende (29) und einem vorderen Ende (30) erstrecken,
die Aufnahmeeinrichtung (27) am vorderen Ende offen ist,
die Aufnahmeeinrichtung (27) am vorderen Ende (30) der Seitenränder (28) offen ist,
die Aufnahmeeinrichtung (27) konfiguriert ist, um zu erlauben, die ersten Seiten (24) der Batterie (9) in Eingriff zu bringen durch Gleiten an den Seitenrändern der Aufnahmeeinrichtung (27) vom vorderen Ende (30) der Seitenränder (28) nach hinten, und
die Aufnahmeeinrichtung (27) konfiguriert ist, um beim Einsetzen der Batterie (9) in die Aufnahmeeinrichtung (27) das Gleiten der Batterie (9) nach hinten zu begrenzen, und
die Aufnahmeeinrichtung (27) so konfiguriert ist, dass ein auf dem Sattel (11) sitzender Benutzer mindestens einen Teil der Batterie (9) sehen kann, wenn die Batterie in der Aufnahmeeinrichtung (27) eingesetzt ist,
**dadurch gekennzeichnet, dass**
in einer normalen Verwendungsposition des Fahrrads (1) das vordere Ende (30) bezüglich des hinteren Endes (29) erhöht ist,
die Aufnahmeeinrichtung (27) an dem hinteren Ende (29) der Seitenränder (28) offen ist, und
dadurch, dass
die Seitenränder (28) der Aufnahmeeinrichtung (27) elektrische Anschlüsse (39, 40) aufweisen, die angepasst sind, um mit komplementären Anschlüssen (39a, 40a) der Batterie (9) in Kontakt zu kommen, um die Batterie (9) mit einer elektrischen Schaltung (51) des Fahrrads (1) elektrisch zu verbinden, wenn die Batterie (9) in der Aufnahmeeinrichtung (27) eingesetzt ist.

2. Fahrrad nach Anspruch 1, wobei die Aufnahmeeinrichtung (27) an der Lenkstange (16) derart angebracht ist, dass die Aufnahmeeinrichtung mit einer vorgegebenen Neigung versehen ist, so dass in der normalen Verwendungsposition des Fahrrads das vordere Ende (30) bezüglich des hinteren Endes (29) erhöht ist.

3. Fahrrad nach Anspruch 1 oder Anspruch 2, wobei die Aufnahmeeinrichtung (27) in Form einer Wiege ist, die einen die zwei Seitenränder (28) verbindenden Boden (32) aufweist, wobei die Aufnahmeeinrichtung zwischen den zwei Seitenrändern nach oben hin offen ist.

4. Fahrrad nach Anspruch 3, wobei der Boden (32) der Aufnahmeeinrichtung visuelle Hinweise (35) aufweist, die dem Benutzer eine Anleitung zum Einsetzen der Batterie (9) in die Aufnahmeeinrichtung (27) bereitstellen.

5. Fahrrad nach Anspruch 3 oder Anspruch 4, wobei der Boden (32) der Aufnahmeeinrichtung mindestens eine zu den Seitenrändern (28) der Aufnahmeeinrichtung parallele Stützrippe (36) aufweist, wobei die Batterie (9) auf dieser Stützrippe (36) aufliegt, wenn die Batterie in der Aufnahmeeinrichtung eingesetzt ist.

6. Fahrrad nach einem der vorstehenden Ansprüche, wobei die elektrischen Anschlüsse der Seitenränder Stromleitungsanschlüsse (39) und Datenleitungsanschlüsse (40) aufweisen.

7. Fahrrad nach einem der vorstehenden Ansprüche, wobei die Seitenränder (28) der Aufnahmeeinrichtung und die ersten Seiten (24) der Batterie Sicherungseinrichtungen (41, 41a) aufweisen, die angepasst sind, um die Batterie (9), wenn sie in der Aufnahmeeinrichtung (27) eingesetzt ist, mittels Klemmung zu sichern.

8. Fahrrad nach einem der vorstehenden Ansprüche, wobei die Seitenränder (28) der Aufnahmeeinrichtung jeweils ein Paar von zueinander parallelen und übereinander angeordneten Rippen (37) aufweisen, die zwischen sich eine Kehle (38) begrenzen, in welcher die elektrischen Anschlüsse (39, 40) der Aufnahmeeinrichtung untergebracht sind, wobei jede der ersten Seiten (24) der Batterie eine Rille (42) aufweist, die eines der Rippenpaare (37) aufnimmt, wobei die komplementären Anschlüsse (39a, 40a) der Batterie in den Rillen (42) gegenüber den elektrischen Anschlüssen (39, 40) der Aufnahmeeinrichtung angeordnet sind.

9. Fahrrad nach einem der vorstehenden Ansprüche, wobei die Batterie (9) eine elektronische Steuerschaltung (63) und von der elektronischen Steuerschaltung (63) gesteuerte elektronische Anzeigeeinrichtungen (64) aufweist, wobei die Anzeigeeinrichtungen (64) von dem auf dem Sattel (11) sitzenden Benutzer aus zu sehen sind.

10. Fahrrad nach Anspruch 9, wobei die Anzeigeeinrichtungen (64) Elektrolumineszenz-Dioden (43) aufweisen.

11. Fahrrad nach Anspruch 9 oder Anspruch 10, wobei die elektronische Steuerschaltung (63) angepasst ist, um Zustandsinformation betreffend den Zustand der Batterie (9) zu empfangen und um die Zustandsinformation mittels der Anzeigeeinrichtungen (64) anzeigen zu lassen.

12. Fahrrad nach einem der Ansprüche 9 bis 11, wobei die elektronische Steuerschaltung (63) angepasst ist, um mit einem Mobilgerät (68), das Navigationseinrichtungen aufweist, zu kommunizieren, wobei die elektronische Steuerschaltung (63) angepasst ist, um Navigationsdaten des Mobilgeräts (68) zu empfangen und um die Navigationsdaten mittels der Anzeigeeinrichtungen (64) anzeigen zu lassen.

13. Fahrrad nach einem der vorstehenden Ansprüche, wobei die Lenkstange (16) eine Trägerstruktur (33) und eine die Trägerstruktur bedeckende Hülle (34) aufweist, wobei die Aufnahmeeinrichtung (27) der Batterie in die Hülle (34) integriert ist.

14. Fahrrad nach einem der vorstehenden Ansprüche, wobei die Batterie (9) aufweist: Detektionseinrichtungen (65), die angepasst sind, um zu detektieren, dass die Batterie mit dem Fahrrad (1) verbunden ist, und Steuereinrichtungen (63), die angepasst sind, um ein Entladen der Batterie solange zu verhindern, bis die Detektionseinrichtungen (65) detektieren, dass die Batterie mit dem Fahrrad verbunden ist.

15. Automatisches System zum Abstellen von Fahrrädern (1), aufweisend:
- mehrere abnehmbare wiederaufladbare elektrische Batterien (9), die jeweils eine abgeplattete Form haben und aufweisen:
* erste und zweite Hauptflächen (22, 23), die zwischen sich eine Dicke (e) der Batterie (9) definieren,
* zwei erste Gegenflächen (24),
* zwei zweite Gegenflächen (25),
- mehrere Elektrofahrräder (1), jeweils aufweisend:
* einen Rahmen (10) mit einem Sattel (11),
* mindestens ein Hinterrad (12), das drehbar an dem Rahmen (10) angebracht ist,
* ein Vorderrad (14), das drehbar an einer Gabel (15) angebracht ist, die fest verbunden mit einer Lenkstange (16) ist, wobei das Vorderrad (14) eine Laufrichtung (X) des Fahrrads bestimmt, wobei die Lenkstange (16) einen gelenkig mit dem Rahmen (10) verbundenen zentralen Teil (17) und zwei Seitenarme (18) mit Griffen (19) aufweist,
* eine Aufnahmeeinrichtung (27), um eine der Batterien (9) aufzunehmen und sie elektrisch mit dem Fahrrad (1) zu verbinden,
- mehrere ortsfeste Verriegelungspfosten (7), an welchen die Fahrräder (1) verriegelt werden können, und
- mindestens eine externe Steuervorrichtung (2, 8), die angepasst ist, um selektiv die Verriegelung und die Entriegelung der Fahrräder (1) an den Verriegelungspfosten (7) zu erlauben,
**dadurch gekennzeichnet, dass**
die Aufnahmeeinrichtung (27) an dem zentralen Teil (17) der Lenkstange (16) ist,
dadurch, dass die Aufnahmeeinrichtung (27) zwei gegenüberliegende parallele Seitenränder (28) aufweist, die sich in die Laufrichtung (X) des Fahrrads (1) zwischen einem hinteren Ende (29) und einem vorderen Ende (30) erstrecken, wobei in einer normalen Verwendungsposition des Fahrrads (1) das vordere Ende (30) bezüglich des hinteren Endes (29) erhöht ist,
die Aufnahmeeinrichtung (27) am vorderen Ende (30) und hinteren Ende (29) der Seitenränder (28) offen ist,
die Aufnahmeeinrichtung (27) konfiguriert ist, um zu erlauben, die ersten Seiten (24) der Batterie (9) in Eingriff zu bringen durch Gleiten an den Seitenrändern der Aufnahmeeinrichtung (27) vom vorderen Ende (30) der Seitenränder (28) nach hinten, und
die Aufnahmeeinrichtung (27) konfiguriert ist, um beim Einsetzen der Batterie (9) in die Aufnahmeeinrichtung (27) das Gleiten der Batterie (9) nach hinten zu begrenzen, und
dadurch, dass
die Seitenränder (28) der Aufnahmeeinrichtung (27) elektrische Anschlüsse (39, 40) aufweisen, die angepasst sind, um mit komplementären Anschlüssen (39a, 40a) der Batterie (9) in Kontakt zu kommen, um die Batterie (9) mit einer elektrischen Schaltung (51) des Fahrrads (1) elektrisch zu verbinden, wenn die Batterie (9) in der Aufnahmeeinrichtung (27) eingesetzt ist,
und dadurch, dass
die Aufnahmeeinrichtung (27) konfiguriert ist, so dass ein auf dem Sattel (11) sitzender Benutzer mindestens einen Teil der Batterie (9) sehen kann, wenn die Batterie in der Aufnahmeeinrichtung (27) eingesetzt ist.

## Claims

1. Elecrically powered cycle comprising:
- a frame (10) having a saddle (11),
- at least one rear wheel (12) rotatably mounted on the frame (10),
- a front wheel (14) rotatably mounted on a fork (15) integral to a handlebar (16), the front wheel (14) defining a direction of advancement (X) of the cycle (1), the handlebar (16) having a central portion (17) hinged to the frame (10) and two lateral arms (18) with handles (19),
- a removable rechargeable battery (9) having a flattened shape and comprising:
• first and second main faces (22, 23) defining a thickness (e) of the battery,
• two opposing first sides (24),
• two opposing second sides (25),
- a receptacle (27) for receiving said battery (9) and connecting it electrically, the receptacle (27) being on the central portion (17) of the handlebar (16), the receptacle (27) comprising two parallel lateral flanges (28) facing one another, extending along the direction of advancement (X) of the cycle (1) between a back end (29) and a front end (30), the receptacle (27) being open at the front end (30) of the lateral flanges (28), the receptacle (27) being shaped to permit slotting the first sides (24) of the battery (9) by sliding the battery rearward on the lateral flanges (28) of the receptacle (27) from the front end (30) of said lateral flanges (28), and the receptacle (27) being shaped to limit the rearward sliding of the battery (9) when said battery (9) is engaged in the receptacle (27), and the receptacle (27) being shaped so that a user seated on the saddle (11) can see at least part of the battery (9) when said battery is engaged in said receptacle (27),
**characterized in that** said front end (30) is raised relative to said back end (29) in the normal usage position of the cycle (1), the receptacle (27) being open at the back end (29) of the lateral flanges (28),
**and in that** the lateral flanges (28) of the receptacle (27) comprise electrical connectors (39, 40) suitable for engaging with complementary connectors (39a, 40a) that are part of the battery (9), in order to connect the battery (9) electrically to an electrical circuit (51) that is part of the cycle (1), when the battery (9) is engaged in the receptacle (27).

2. Cycle according to claim 1, wherein the receptacle (27) is secured to the handlebar (16) so as to impart a predetermined inclination to said receptacle, such that said front end (30) is raised relative to said back end (29) in the normal usage position of the cycle.

3. Cycle according to claim 1 or claim 2, wherein the receptacle (27) is shaped like a cradle having a bottom (32) connecting the two lateral flanges (28), said receptacle being open at the top between the two lateral flanges.

4. Cycle according to claim 3, wherein the bottom (32) of the receptacle comprises visual cues (35) to guide the user in inserting the battery (9) into the receptacle (27).

5. Cycle according to claim 3 or claim 4, wherein the bottom (32) of the receptacle comprises at least one supporting rib (36) parallel to the lateral flanges (28) of the receptacle, the battery (9) resting on said supporting rib (36) when said battery is engaged in the receptacle.

6. Cycle according to one of the preceding claims, wherein the electrical connectors of the lateral flanges comprise power circuit connectors (39) and data circuit connectors (40).

7. Cycle according to one of the preceding claims, wherein the lateral flanges (28) of the receptacle and the first sides (24) of the battery comprise retaining means (41, 41a) suitable for retaining the battery (9) by snap-fitting when the battery is engaged in the receptacle (27).

8. Cycle according to one of the preceding claims, wherein the lateral flanges (28) of the receptacle each comprise a pair of superposed parallel ribs (37) defining a groove (38) betwen them in which said electrical connectors (39, 40) of the receptacle are housed, the first sides (24) of the battery each having a groove (42) which receives one of said pairs of ribs (37), the complementary connectors (39a, 40a) of the battery being arranged in said grooves (42) facing the electrical connectors (39, 40) of the receptacle.

9. Cycle according to one of the preceding claims, wherein the battery (9) comprises an electronic control circuit (63) and an electronic display means (64) controlled by said electronic control circuit (63), said display means (64) being visible to the user seated on the saddle (11).

10. Cycle according to claim 9, wherein the display means (64) comprises light-emitting diodes (43).

11. Cycle according to claim 9 or claim 10, wherein the electronic control circuit (63) is adapted to receive status information for the battery (9) and to display said status information by the display means (64).

12. Cycle according to any of claims 9 to 11, wherein the electronic control circuit (63) is adapted to communicate with a mobile phone (68) comprising navigation means, the electronic control circuit (63) being adapted to receive navigation information from the mobile phone (68) and to display said navigation information by the display means (64).

13. Cycle according to any one of the preceding claims, wherein the handlebar (16) comprises a carrying structure (33) and a casing (34) covering said carrying structure, the receptacle (27) of the battery being integrated with said casing (34).

14. Cycle according to any one of the preceding claims, wherein the battery (9) comprises detection means (65) adapted to detect whether the battery is connected to the cycle (1), and control means (63) adapted to prevent the battery from discharging when the detecting means (65) does not detect that the battery is connected to the cycle.

15. Automatic storage system for cycles (1), comprising:
- a plurality of removable rechargeable batteries (9), each having a flattened shape and comprising:
• first and second main faces (22, 23) defining between them a thickness (e) of the battery (9),
• two opposing first sides (24),
• two oppoding second sides (25),
- a plurality of electrically powered cycles (1) each comprising:
• a frame (10) having a saddle (11),
• at least one rear wheel (12) rotatably mounted on the frame (10),
• a front wheel (14) rotatably mounted on a fork (15) integral to a handlebar (16), the front wheel (14) defining a direction of advancement (X) of the cycle, the handlebar (16) having a central portion (17) hinged to the frame (10) and two lateral arms (18) with handles (19),
• a receptacle (27) for receiving one of said batteries (9) and for connecting it electrically to the cycle (1),
- a plurality of fixed locking terminals (7) to which said cycles (1) can be locked,
- and at least one external control device (2, 8) adapted for selectively allowing the locking and unlocking of cycles (1) on said locking terminals (7),
**characterized in that** the receptacle (27) is on the central portion (17) of the handlebar (16),
**in that** the receptacle (27) comprises two parallel lateral flanges (28) facing one another, extending along the direction of advancement (X) of the cycle (1) between a back end (29) and a front end (30), the front end (30) being raised relative to the back end (29) in the normal usage position of the cycle (1), the receptacle (27) being open at the front (30) and back (29) ends of the lateral flanges (28), the receptacle (27) being shaped to permit slotting the first sides (24) of the battery (9) by sliding the battery rearward on the lateral flanges (28) of the receptacle (27) from the front end (30) of said lateral flanges (28), and the receptacle (27) being shaped to limit the rearward sliding of the battery (9) when said battery (9) is engaged in the receptacle (27),
**in that** the lateral flanges (28) of the receptacle (27) comprise electrical connectors (39, 40) suitable for engaging with complementary connectors (39a, 40a) that are part of the battery (9), in order to connect the battery (9) electrically to an electrical circuit (51) that is part of the cycle (1), when the battery (9) is engaged in the receptacle (27),
**and in that** the receptacle (27) is shaped so that a user seated on the saddle (11) can see at least part of the battery (9) when said battery is engaged in said receptacle (27).
